# EUROPEAN PATENT APPLICATION

(11) **EP 2 760 149 A1**
(43) Date of publication of application: **30.07.2014**
(21) Application number: 12841217.8
(22) Date of filing: 27.08.2012
(51) Int. Cl.: H04L 1/00, H04L 27/26

(54) **METHOD AND DEVICE FOR IMPLEMENTING DATA TRANSMISSION**

(30) Priority: 18.10.2011 CN 201110316981
(71) Applicant: Huawei Technologies Co., Ltd., Shenzhen, Guangdong 518129 (CN); David, Mazzarese, Shenzhen Guangdong 518129 (CN); Ren, Xiaotao, Shenzhen Guangdong 518129 (CN)
(72) Inventor: DAVID, Mazzarese, Shenzhen Guangdong 518129 (CN); REN, Xiaotao, Shenzhen Guangdong 518129 (CN)
(74) Representative: Maiwald Patentanwalts GmbH
(86) International application number: PCT/CN2012/080610
(87) International publication number: WO 2013/056599

(57) **Abstract**

A method and an apparatus for implementing data transmission are disclosed. In the method and the apparatus according to embodiments of the present invention, a base station maps modulation symbols to resource elements, and sends precoded modulation symbols to a UE, so that the UE can use the reference signal frequency shift information and a mapping rule according to which the modulation symbols are mapped to the REs to complete data demodulation; and compared with an existing muting solution, in the method and the apparatus, all the REs can be used to complete data transmission, thereby avoiding waste of REs, and further improving throughput of service data, and improving spectrum efficiency of a system.

## Description

This application claims priority to Chinese Patent Application No. 201110316981.7, filed with the Chinese Patent Office on October 18, 2011 and entitled "METHOD AND APPARATUS FOR IMPLEMENTING DATA TRANSMISSION", which is hereby incorporated by reference in its entirety.

### TECHNICAL FIELD

The present invention relates to the field of communications technologies, and in particular, to a method and an apparatus for implementing data transmission.

### BACKGROUND

As a substitute for a third generation mobile communications system and a post-third generation mobile communications system, a fourth generation mobile communications system can provide a higher peak user throughput rate, average user throughput rate, and edge user throughput rate, and therefore can provide better data transmission experience for a user.

To obtain higher user throughput, the fourth generation mobile communications system introduces a coordinated multiple points processing (Coordinated Multiple Points, CoMP) technology. In a CoMP scenario, multiple cells provide a data transmission service for a same UE (User Equipment, user equipment) at the same time, which is different from a traditional single cell service in that, in the CoMP scenario, the UE needs to measure reference signals delivered by multiple serving base stations, estimate downlink channel information that is from the multiple base stations, and feed back the information to each serving base station.

However, in the CoMP system, when data transmission is performed, a frequency shift exists in a reference signal, for example, a CRS (Common Reference Signal, common reference signal), which is among the multiple cells, and therefore the reference signal may collide with data on a PDSCH (PDSCH Physical Downlink Sharing Channel, physical downlink sharing channel); that is, in a process of data measurement and demodulation by using the reference signal, strong interference exists between the reference signal and data on a part of REs (Resource Element, resource element), and therefore the data on the part of resource elements cannot be correctly demodulated by the reference signal.

In view of this, a solution is provided in the prior art: A Muting (muting) technology is used to maintain zero transmit power (Zero power) on the part of REs where collision occurs; that is, no data is sent on the part of REs, thereby preventing the data from interfering with the reference signal. However, although this technology can prevent the data from interfering with the reference signal, because no data is sent on the part of REs, waste of time-frequency resources is caused, and therefore spectrum efficiency of an entire communications system is further effected.

### SUMMARY

In view of this, embodiments of the present invention provide a method and an apparatus for implementing data transmission, which can reduce waste of a video resource, and improve spectrum efficiency of a system.

To solve the foregoing problem, the embodiments of the present invention provide the following technical solutions:
According to one aspect, an embodiment provides a method for implementing data transmission, where the method includes:
   mapping modulation symbols of multiple cells in a transmission set to resource elements REs according to a preset mapping rule; and
   performing precoding on the modulation symbols and then sending precoded modulation symbols to the UE, so that the UE receives the mapping rule according to which the modulation symbols are mapped to the REs, and reference signal frequency shift information, and uses the mapping rule and the reference signal frequency shift information to demodulate received data.

According to another aspect, an embodiment provides a method for implementing data transmission, where the method includes:
obtaining reference signal frequency shift information used by multiple cells in a transmission set and a mapping rule according to which modulation symbols are mapped to resource elements REs;
receiving precoded modulation symbols sent by a base station; and
using the reference signal frequency shift information and the mapping rule according to which the modulation symbols are mapped to the REs to demodulate received data.

According to another aspect, an embodiment provides a base station, where the base station includes:
a mapping unit, configured to map modulation symbols of multiple cells in a transmission set to resource elements REs according to a preset mapping rule;
a precoding unit, configured to perform precoding on the modulation symbols that the mapping unit has mapped; and
a sending unit, configured to send the modulation symbols on which the precoding unit completes precoding to the UE, so that the UE receives the mapping rule according to which the modulation symbols are mapped to the REs, and reference signal frequency shift information, and uses the mapping rule and the reference signal frequency shift information to demodulate received data.

According to another aspect, an embodiment provides a UE, where the UE includes:
an obtaining unit, configured to obtain reference signal frequency shift information used by multiple cells in a transmission set and a mapping rule according to which modulation symbols are mapped to resource elements REs;
a receiving unit, configured to receive data that is obtained after precoding is performed on the modulation symbols and is sent by a base station; and
a demodulating unit, configured to use the reference signal frequency shift information and the mapping rule that are obtained by the obtaining unit to demodulate the data received by the receiving unit.

It can be seen that, in the method and the apparatus according to the embodiments of the present invention, a base station maps modulation symbols to resource elements, and sends precoded modulation symbols to a UE, so that the UE may use the reference signal frequency shift information and a mapping rule according to which the modulation symbols are mapped to the REs to complete data demodulation, so that compared with an existing muting solution, in the method and the apparatus, all the REs can be used to complete data transmission, thereby avoiding waste of REs, and further improving throughput of service data, and improving spectrum efficiency of a system.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for implementing data transmission according to a first embodiment of the present invention;
FIG. 2 is a schematic structural diagram of a base station according to a third embodiment of the present invention;
FIG. 3 is a schematic structural diagram of a UE according to a fourth embodiment of the present invention; and
FIG. 4 is a schematic structural diagram of a demodulating unit according to the fourth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

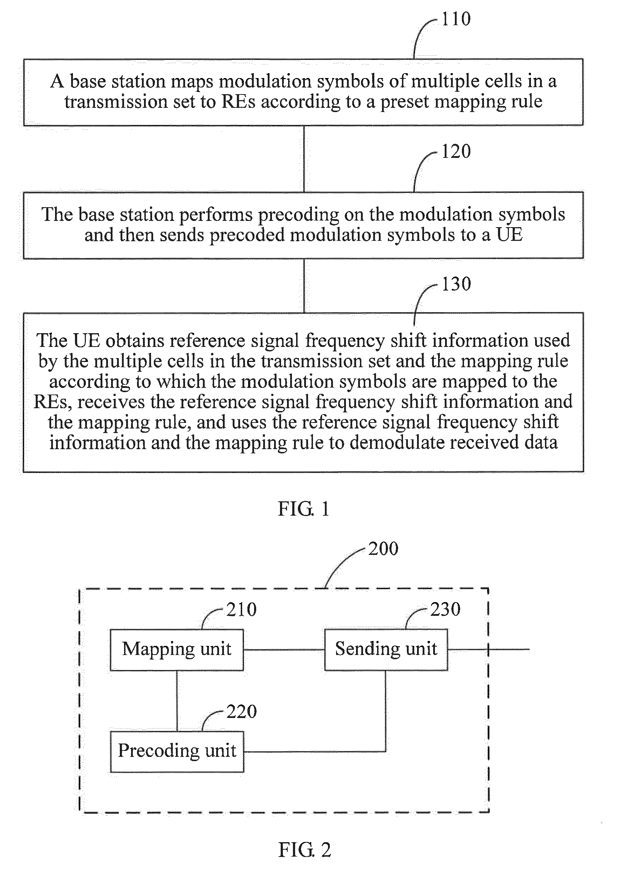

A first embodiment of the present invention provides a method for implementing data transmission. This method may be applied to an OFDM (Orthogonal Frequency Division Multiplexing, orthogonal frequency division multiplexing) system, or may also be applicable to a CDMA (Code Division Multiple Access, also called code division multiple access) system, a TDMA (Time Division Multiple Access, time division multiple access) system, and other mobile communications systems, which is not specifically limited in the embodiment of the present invention. Specifically, as shown in FIG. 1, the method includes:
Step 110: A base station maps modulation symbols of multiple cells in a transmission set to REs according to a preset mapping rule. It should be noted that, the transmission set mentioned in this embodiment refers to a set of cells in a coordinated multi-point transmission system that transmit data to a UE, and the multiple cells mentioned in this embodiment refer to two or more cells, which is similar in the following and is not repeatedly described..

Specifically, in this embodiment, a mapping from the modulation symbols to the REs may be implemented by using the following preset mapping rule (hereinafter referred to as "mapping rule"); however, the present invention is not limited thereto:
A. mapping first class modulation symbols in data packets to REs in same time-frequency positions among the multiple cells; and
B. mapping second class modulation symbols in data packets to REs in different time-frequency positions among the multiple cells, where REs in which the second class modulation symbols mapped by one cell are located are used to map reference signals in another cell.
   In addition, the preset mapping rule according to which the mapping is completed may further include:
C. grouping REs in which reference signals used by the multiple cells are located into multiple groups, and mapping a same modulation symbol to REs that are in a same group; where preferably, a grouping manner used in this embodiment is to group REs in which reference signals with a same reference signal index number are located into one group; however, this embodiment is not limited thereto.

It should be noted that, in this embodiment, the "first class modulation symbols" and the "second class modulation symbols" are only for differentiating whether the modulation symbols are transmitted by the REs in same time-frequency positions or the REs in different time-frequency positions; that is, a difference between the first class modulation symbols and the second class modulation symbols lies only in whether an RE occupied by a modulation symbol and in a serving cell is a reference signal RE in another corresponding coordinated cell; and if not, the modulation symbol is a first class modulation symbol, and if yes, the modulation symbol is a second class modulation symbol. However, for the modulation symbol itself, the "first class modulation symbols" and the "second class modulation symbols" are not differentiated, which is not repeatedly described herein.

The following specifically describes the foregoing mapping rule by using two cells as an example. Assuming that the first class modulation symbols are {x1-x96}, and the second class modulation symbols are {z1-z12}, a specific mapping rule is:
When transmitting the first class modulation symbols, a cell 1 and a cell 2 use REs in same time-frequency positions.

However, an RE used by the cell 1 to transmit the second class modulation symbols is used to transmit a reference signal in the cell 2. Similarly, an RE used by the cell 2 to transmit the second class modulation symbols is also used to transmit a reference signal in the cell 1.

Two REs in each of the cell 1 and the cell 2 belong to a same reference signal RE group 1; three REs in each of the cell 1 and the cell 2 belong to another reference signal RE group 2; four REs in each of the cell 1 and the cell 2 also belong to a same reference signal RE group 3; and reference signal REs in a same reference signal RE group have a common characteristic that REs in each RE group have a same reference signal index number.

Step 120: The base station performs precoding on the modulation symbols and then sends precoded modulation symbols to the UE.

In this embodiment, the base station performs precoding on the modulation symbols in the following manners; however, the present invention is not limited thereto:
A. All modulation symbols transmitted by each cell in the multiple cells use same precoding.
B. Different cells may use same precoding or different precoding.

The following provides detailed description by using two cells as an example, where the first class modulation symbols are {x1-x96}, and the second class modulation symbols are {z1-z12}:
All data modulation symbols transmitted by a cell 1 use a same precoding matrix W1, and all data modulation symbols transmitted by a cell 2 also use a same precoding matrix W2; where the precoding W1 used by the cell 1 and the precoding W2 used by the cell 2 may be the same or may also be different. After the base station completes the precoding operation, the cell 1 transmits a set of modulation symbols {W1z1-W1x96} obtained after precoding by using W1, and a UE specific reference signal; and the cell 2 transmits a set of modulation symbols {W2z1-W2x96} obtained after precoding by using W2, and a UE specific reference signal.

Step 130: The UE obtains reference signal frequency shift information used by the multiple cells in the transmission set and the mapping rule according to which the modulation symbols are mapped to the REs, receives the reference signal frequency shift information and the mapping rule, and uses the reference signal frequency shift information and the mapping rule to demodulate data sent by the base station.

In an actual application process, the data may be demodulated by using the following manner; however, the present invention is not limited thereto:
S 131: After the UE receives the precoded modulation symbols sent by the base station, estimate a channel state matrix H on the UE specific reference signal.
S132: Use the obtained reference signal frequency shift information and the mapping rule to identify an RE that does not transmit a reference signal, and use the estimated H to obtain, by demodulation, a data signal borne by the RE that does not transmit a reference signal.
S133: Use the obtained reference signal frequency shift information to identify an RE group that is in a cell and transmits a reference signal, and combine signals on all REs in each RE group.
S134: Estimate a reference signal of each cell, reconstruct a receiving signal of the reference signal, subtract a reconstructed receiving signal of the reference signal from the combined signal, and use the H to obtain, by demodulation, a data signal from the combined signal from which the reconstructed receiving signal of the reference signal has been subtracted, so as to complete a data transmission process.

In addition, in this embodiment, the UE may obtain the reference signal frequency shift information and the mapping rule according to which the modulation symbols are mapped to the REs by using multiple manners, for example, presetting, by using a presetting manner and in the UE, the reference signal frequency shift information and the mapping rule according to which the modulation symbols are mapped to the REs, where the presetting manner may be understood as presetting, in the UE, the reference signal frequency shift information and the mapping rule according to which the modulation symbols are mapped to the REs; or obtaining, by the UE by using downlink signaling delivered by the base station, the reference signal frequency shift information and the mapping rule according to which the modulation symbols are mapped to the REs; or when sending downlink data to the UE, notifying, by the base station, the UE of the reference signal frequency shift information and the mapping rule according to which the modulation symbols are mapped to the REs; and a specific obtaining manner is not specifically limited in this embodiment.

It should be noted that, the reference signal mentioned in this embodiment of the present invention is a CRS or a CSI-RS (Channel State Information Reference Signal, channel state information reference signal), or certainly may also be another reference signal in which a frequency shift exists, which is not specifically limited in this embodiment.

In the following, a second embodiment uses two specific cells as an example to provide detailed description about the method in the first embodiment, where a CRS is used as an example for a reference signal. The method includes:
(1) On first class REs bearing first class modulation symbols, a cell 1 of a base station sends a modulation symbol W1*x (where x is a signal before precoding) that is precoded by using W1; meanwhile, on the first class REs bearing the first class modulation symbols, a cell 2 sends a modulation symbol W2*x (where x is a signal before precoding) that is precoded by using a W2 matrix.
(2) On second class REs bearing second class modulation symbols, the cell 2 sends a CRS; meanwhile, on the second class REs bearing the second class modulation symbols, the cell 1 sends a modulation symbol W1*z (where z is a signal before precoding) that is precoded by using the W1 matrix.
(3) On the second class REs bearing the second class modulation symbols, the cell 1 sends a CRS; meanwhile, on the second class REs bearing the second class modulation symbols, the cell 2 sends a modulation symbol W2*z (where z is a signal before precoding) that is precoded by using the W2 matrix.
(4) The cell 1 and the cell 2 send a UE specific reference signal while sending a precoded modulation symbol.
(5) After a UE receives data sent by the base station, estimate a joint channel state h, h=H1*W1+H2*W2, on the UE specific reference signal.
(6) On the first class REs, receive a joint signal y, y=H1*W1*x+H2*W2*x+n=h*x+n.
(7) On the second class REs, receive a data signal y21, y22=H1*W1*z+CRS2+n, from the cell 1 to estimate a CRS2; and on the second class REs, receive a data signal y22, y21=H2*W2*z+CRS1+n, from the cell 2 to estimate a CRS1.
(8) Combine the data signal y21 of the cell and the data signal y22 of the cell 2 that are received, that is, y21+y22=H1*W1*z+H2*W2*z+CRS1+CRS2+n=h*z+CRS1+CRS2+n; and then subtract CRS1+CRS2 from a j oint signal y21+y22. In this way, h can be used to estimate an original sending signal x.

It can be seen that, in the methods according to the embodiments of the present invention, a base station maps modulation symbols to resource elements, and sends precoded modulation symbols to a UE, so that the UE may use the reference signal frequency shift information and a mapping rule according to which the modulation symbols are mapped to the REs to complete data demodulation, and compared with an existing muting solution, in the methods, all the REs can be used to complete data transmission, thereby avoiding waste of REs, and further improving throughput of service data, and improving spectrum efficiency of a system.

The methods are applicable to a CoMP process in which a CRS reference signal collides with PDSCH data. In this technical solution, compared with a CRS Muting technical solution, all REs can be used, thereby avoiding waste of REs after puncturing, and further improving throughput of service data, and improving spectrum efficiency of a system.

Based on the idea described above, a third embodiment of the present invention further provide a base station, where the base station can implement the method for implementing data transmission in the embodiments described above. As shown in FIG. 2, the base station 200 includes:
a mapping unit 210, configured to map modulation symbols of multiple cells in a transmission set to resource elements REs according to a preset mapping rule; where the mapping rule according to which the modulation symbols are mapped to the REs is: mapping a part of modulation symbols in data packets to REs in same time-frequency positions among the multiple cells; mapping another part of modulation symbols in the data packets to REs in different time-frequency positions among the multiple cells, where the REs in which the another part of modulation symbols mapped by one cell are located are used to map reference signals in another cell; and grouping REs in which reference signals used by the multiple cells are located into multiple groups, and mapping a same modulation symbol to REs that are in a same group;
a precoding unit 220, configured to perform precoding on the modulation symbols that the mapping unit 210 has mapped; where a rule for the precoding unit 220 to perform a precoding operation is: all modulation symbols transmitted by each cell in the multiple cells use same precoding; and different cells use same precoding or different precoding; and
a sending unit 230, configured to send the modulation symbols on which the precoding unit 220 completes precoding to the UE, so that the UE receives the mapping rule according to which the modulation symbols are mapped to the REs, and reference signal frequency shift information, and uses the mapping rule and the reference signal frequency shift information to demodulate received data.

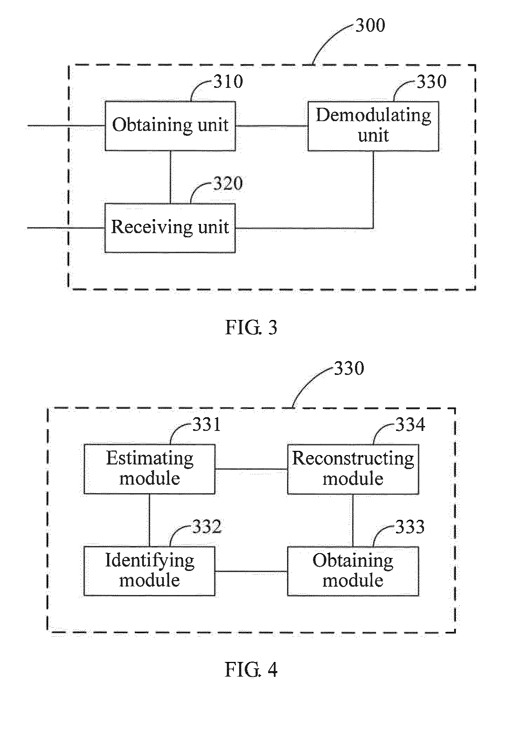

Based on the same idea described above, a fourth embodiment of the present invention further provide a UE, where the UE can implement the method for implementing data transmission in the embodiments described above. As shown in FIG. 3, the UE 300 includes:
an obtaining unit 310, configured to obtain reference signal frequency shift information used by multiple cells in a transmission set and a mapping rule according to which modulation symbols are mapped to REs; where the mapping rule obtained by the obtaining unit 310 includes: mapping a part of modulation symbols in data packets to REs in same time-frequency positions among the multiple cells; mapping another part of modulation symbols in the data packets to REs in different time-frequency positions among the multiple cells, where REs in which the another part of modulation symbols mapped by one cell are located are used to map reference signals in another cell; and grouping REs in which reference signals used by the multiple cells are located into multiple groups, and mapping a same modulation symbol to REs that are in a same group;
a receiving unit 320, configured to receive modulation symbols precoded by a base station; where a precoding rule for the modulation symbols received by the receiving unit 320 includes: all modulation symbols transmitted by each cell in the multiple cells use same precoding; and different cells use same precoding or different precoding; and
a demodulating unit 330, configured to use the reference signal frequency shift information and the mapping rule that are obtained by the obtaining unit 310 to demodulate data received by the receiving unit 320.

As shown in FIG. 4, the demodulating unit 330 may further include:
an estimating module 331, configured to estimate a channel state matrix on a UE specific reference signal;
an identifying module 332, configured to use the reference signal frequency shift information and the mapping rule that are obtained by the obtaining unit 310 to identify an RE that does not transmit a reference signal, and use the channel state matrix estimated by the estimating module 331 to obtain, by demodulation, a data signal borne by the RE that does not transmit a reference signal;
a combining module 333, configured to use the reference signal frequency shift information obtained by the obtaining unit to identify an RE group that is in a cell and transmits a reference signal, and combine signals on all REs in each RE group; and
a reconstructing module 334, configured to estimate a reference signal of each cell, reconstruct a receiving signal of the reference signal, subtract a reconstructed receiving signal of the reference signal from the signals combined by the combining module 333, and use the channel state matrix to obtain, by demodulation, a data signal from a combined signal from which the reconstructed receiving signal of the reference signal has been subtracted.

In addition, the obtaining unit 310 may further include any one of the following three modules (which are not shown in the figure):
a first processing module, configured to obtain the shift information and the mapping rule by using a presetting manner;
a second processing module, configured to extract the frequency shift information and the mapping rule from downlink signaling delivered by the base station; and
a third processing module, configured to extract the frequency shift information and the mapping rule when receiving downlink data sent by the base station.

A person skilled in the art may be further aware that, in combination with the examples described in the embodiments disclosed in this specification, units and algorithm steps may be implemented by electronic hardware, computer software, or a combination of the two. To clearly describe the interchangeability between the hardware and the software, the foregoing generally describes compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be directly implemented by hardware, a software module executed by a processor, or a combination of the two.

According to the foregoing description of the disclosed embodiments, a person skilled in the art can implement or use the embodiments of the present invention. Various modifications to these embodiments are obvious to a person skilled in the art. General principles defined in this specification may be implemented in other embodiments without departing from the spirit or scope of the embodiments of the present invention. Therefore, the embodiments of the present invention are not limited to these embodiments described in this specification, but shall comply with the widest scope that is consistent with the principles and novel characteristics disclosed in this specification.

The foregoing descriptions are merely exemplary embodiments of the embodiments of the present invention, but are not intended to limit the embodiments of the present invention. Any modification, equivalent replacement, or improvement made within the spirit and principle of the embodiments of the present invention shall fall within the protection scope of the embodiments of the present invention.

## Claims

1. A method for implementing data transmission, comprising:
mapping modulation symbols of multiple cells in a transmission set to resource elements REs according to a preset mapping rule; and
performing precoding on the modulation symbols and then sending precoded modulation symbols to the UE, so that the UE receives the mapping rule according to which the modulation symbols are mapped to the REs, and reference signal frequency shift information, and uses the mapping rule and the reference signal frequency shift information to demodulate received data.

2. The method according to claim 1, wherein the preset mapping rule comprises:
mapping a part of modulation symbols in data packets to REs in same time-frequency positions among the multiple cells; and
mapping another part of modulation symbols in the data packets to REs in different time-frequency positions among the multiple cells, wherein REs in which the another part of modulation symbols mapped by one cell are located are used to map reference signals in another cell.

3. The method according to claim 2, wherein the preset mapping rule further comprises:
grouping REs in which reference signals used by the multiple cells are located into multiple groups, and mapping a same modulation symbol to REs that are in a same group.

4. The method according to claim 3, wherein the grouping manner is: grouping REs in which reference signals with a same reference signal index number are located into one group.

5. The method according to claim 1, wherein a rule for performing precoding on the modulation symbols comprises:
all modulation symbols transmitted by each cell in the multiple cells use same precoding; and
different cells use same precoding or different precoding.

6. The method according to any one of claims 1 to 5, wherein the reference signals are a common reference signal CRS or a channel state information reference signal CSI-RS.

7. A method for implementing data transmission, comprising:
obtaining reference signal frequency shift information used by multiple cells in a transmission set and a mapping rule according to which modulation symbols are mapped to resource elements REs;
receiving precoded modulation symbols sent by a base station; and
using the reference signal frequency shift information and the mapping rule according to which the modulation symbols are mapped to the REs to demodulate received data.

8. The method according to claim 7, wherein the obtained mapping rule comprises:
mapping a part of modulation symbols in data packets to REs in same time-frequency positions among the multiple cells; and
mapping another part of modulation symbols in the data packets to REs in different time-frequency positions among the multiple cells, wherein REs in which the another part of modulation symbols mapped by one cell are located are used to map reference signals in another cell.

9. The method according to claim 8, wherein the obtained mapping rule further comprises:
grouping REs in which reference signals used by the multiple cells are located into multiple groups, and mapping a same modulation symbol to REs that are in a same group.

10. The method according to claim 7, wherein a precoding rule for the modulation symbols comprises:
all modulation symbols transmitted by each cell in the multiple cells use same precoding; and
different cells use same precoding or different precoding.

11. The method according to claim 7, wherein the using the reference signal frequency shift information and the mapping rule to demodulate received data comprises:
estimating a channel state matrix on a UE specific reference signal;
using the obtained reference signal frequency shift information and the mapping rule to identify an RE that does not transmit a reference signal, and using the estimated channel state matrix to obtain, by demodulation, a data signal borne by the RE that does not transmit a reference signal;
using the obtained reference signal frequency shift information to identify an RE group that is in a cell and transmits a reference signal, and combining signals on all REs in each RE group; and
estimating a reference signal of each cell, reconstructing a receiving signal of the reference signal, subtracting a reconstructed receiving signal of the reference signal from the combined signal, and using the channel state matrix to obtain, by demodulation, a data signal from the combined signal from which the reconstructed receiving signal of the reference signal has been subtracted.

12. The method according to claim 1, wherein the obtaining reference signal frequency shift information and a mapping rule according to which modulation symbols are mapped to REs comprises:
obtaining the shift information and the mapping rule by using a presetting manner; or
extracting the frequency shift information and the mapping rule from downlink signaling delivered by the base station; or
extracting the frequency shift information and the mapping rule when receiving downlink data sent by the base station.

13. The method according to any one of claims 7 to 12, wherein:
the reference signals are a common reference signal CRS or a channel state information reference signal CSI-RS.

14. A base station, comprising:
a mapping unit, configured to map modulation symbols of multiple cells in a transmission set to resource elements REs according to a preset mapping rule;
a precoding unit, configured to perform precoding on the modulation symbols that the mapping unit has mapped; and
a sending unit, configured to send the modulation symbols on which the precoding unit completes precoding to the UE, so that the UE receives the mapping rule according to which the modulation symbols are mapped to the REs, and reference signal frequency shift information, and uses the mapping rule and the reference signal frequency shift information to demodulate received data.

15. The base station according to claim 14, wherein the preset mapping rule used by the mapping unit comprises:
mapping a part of modulation symbols in data packets to REs in same time-frequency positions among the multiple cells; and
mapping another part of modulation symbols in the data packets to REs in different time-frequency positions among the multiple cells, wherein REs in which the another part of modulation symbols mapped by one cell are located are used to map reference signals in another cell.

16. The base station according to claim 15, wherein the preset mapping rule used by the mapping unit further comprises:
grouping REs in which reference signals used by the multiple cells are located into multiple groups, and mapping a same modulation symbol to REs that are in a same group.

17. The base station according to claim 14, wherein a rule for the precoding unit to perform a precoding operation is:
all modulation symbols transmitted by each cell in the multiple cells use same precoding; and
different cells use same precoding or different precoding.

18. A user equipment UE, comprising:
an obtaining unit, configured to obtain reference signal frequency shift information used by multiple cells in a transmission set and a mapping rule according to which modulation symbols are mapped to resource elements REs;
a receiving unit, configured to receive data that is obtained after precoding is performed on the modulation symbols and is sent by a base station; and
a demodulating unit, configured to use the reference signal frequency shift information and the mapping rule that are obtained by the obtaining unit to demodulate the data received by the receiving unit.

19. The UE according to claim 18, wherein the mapping rule obtained by the obtaining unit comprises:
mapping a part of modulation symbols in data packets to REs in same time-frequency positions among the multiple cells; and
mapping another part of modulation symbols in the data packets to REs in different time-frequency positions among the multiple cells, wherein REs in which the another part of modulation symbols mapped by one cell are located are used to map reference signals in another cell.

20. The UE according to claim 19, wherein the mapping rule obtained by the obtaining unit further comprises:
grouping REs in which reference signals used by the multiple cells are located into multiple groups, and transmitting a same modulation symbol to REs that are in a same group.

21. The UE according to claim 18, wherein a precoding rule for modulation symbols received by the receiving unit comprises:
all modulation symbols transmitted by each cell in the multiple cells use same precoding; and
different cells use same precoding or different precoding.

22. The UE according to claim 18, wherein the demodulating unit comprises:
an estimating module, configured to estimate a channel state matrix on a UE specific reference signal;
an identifying module, configured to use the reference signal frequency shift information and the mapping rule that are obtained by the obtaining unit to identify an RE that does not transmit a reference signal, and use the channel state matrix estimated by the estimating module to obtain, by demodulation, a data signal borne by the RE that does not transmit a reference signal;
a combining module, configured to use the reference signal frequency shift information obtained by the obtaining unit to identify an RE group that is in a cell and transmits a reference signal, and combine signals on all REs in each RE group; and
a reconstructing module, configured to estimate a reference signal of each cell, reconstruct a receiving signal of the reference signal, subtract a reconstructed receiving signal of the reference signal from the signals combined by the combining module, and use the channel state matrix to obtain, by demodulation, a data signal from a combined signal from which the reconstructed receiving signal of the reference signal has been subtracted.

23. The UE according to claim 18, wherein the obtaining unit comprises:
a first processing module, configured to obtain the shift information and the mapping rule by using a presetting manner; or
a second processing module, configured to extract the frequency shift information and the mapping rule from downlink signaling delivered by the base station; or
a third processing module, configured to extract the frequency shift information and the mapping rule when receiving downlink data sent by the base station.
